# EUROPÄISCHE PATENTSCHRIFT

(11) **EP 2 137 585 B1**
(45) Veröffentlichungstag und Bekanntmachung des Hinweises auf die Patenterteilung: **26.10.2011**
(21) Anmeldenummer: 08735774.5
(22) Anmeldetag: 03.04.2008
(51) Int. Cl.: G05D 9/12

(54) **SYSTEM FÜR DAS BEFÜLLEN EINES GEFÄSSES**
SYSTEM FOR FILLING A VESSEL
SYSTÈME POUR LE REMPLISSAGE D'UN RÉCIPIENT

(30) Priorität: 13.04.2007 DE 102007017498
(43) Veröffentlichungstag der Anmeldung: 30.12.2009
(73) Patentinhaber: BSH Bosch und Siemens Hausgeräte GmbH, 81739 München (DE)
(72) Erfinder: WINTERHALDER, Rolf, 89284 Pfaffenhofen (DE)
(86) Internationale Anmeldenummer: PCT/EP2008/054030
(87) Internationale Veröffentlichungsnummer: WO 2008/125515

(56) Entgegenhaltungen:
- US-A- 4 559 979
- US-A- 4 572 253
- US-A- 4 917 155

## Beschreibung

Die vorliegende Erfindung betrifft ein System zum Befüllen eines Trinkgefäßes mit einem Getränk.

Systeme für das Befüllen eines Trinkgefäßes mit Getränken sind im Stand der Technik bekannt. So beschreibt beispielsweise die DE 20 2005 015 254 U1 eine Vorrichtung zum selbsttätigen Befüllen von Trinkgefäßen. Bei dieser Vorrichtung werden die zu befüllenden Gefäße über eine Fördereinrichtung einer Zapfeinrichtung zugeführt und dort befüllt. Dabei weist die Vorrichtung einen optischen Sensor auf, der den Füllstand der Trinkgefäße erfasst. Beim Erreichen eines vorgegebenen Füllstands wird der Füllvorgang beendet. Die DE 102 05 944 A1 beschreibt eine Zapf- oder Füllvorrichtung in verschiedenen Automatisierungsstufen. Bei dieser Vorrichtung werden zu befüllende Gläser oder Behälter nach Vorgabe eines Füllprozesses mittels einer Auswerteelektronik automatisch befüllt. Weiterhin beschreibt die DE 92 13 648 U1 eine Vorrichtung zur Erkennung des Füllstandes in beliebigen Gefäßen. Dabei wird die Höhe des Flüssigkeitsspiegels mittels eines Sensors, der nach einem optischen System oder nach einem Ultraschallprinzip arbeitet, ermittelt.

Weitere Systeme zum Befüllen eines Trinkgefäßes sind in der US 4 572 253, US 4 559 979 und der US 4 917 155 offenbart.

Diese im Stand der Technik verfügbaren Vorrichtungen zur automatischen Befüllung weisen eine Reihe von Nachteilen auf, so unter anderem den, dass die Befüllung stets in Abhängigkeit von einem vorgegebenen Volumen oder einer vorgegebenen Füllhöhe erfolgt. Im einfachsten Fall dosiert das System unabhängig von der Art des zu befüllenden Systems stets das gleiche Volumen. Orientiert sich die Befüllung an der Füllhöhe, kann ein definiertes Volumen nur bei Gefäßen mit einer gleichen Größe dosiert werden. Werden z.B. Gefäße mit unterschiedlichem Durchmesser bei gleicher Höhe eingestellt, so beinhalten diese nach dem Befüllvorgang bei gleicher Füllhöhe unterschiedliche Flüssigkeitsvolumina. Noch deutlicher werden die Unterschiede im Stand der Technik dann, wenn Gefäße mit unterschiedlicher Höhe eingestellt werden. Werden beispielsweise nacheinander ein flaches Gefäß und ein hohes Gefäß eingestellt, so kann eine ausschließlich an der Füllhöhe oder an einem vorgegebenen Volumen orientierte Befüllung dazu führen, dass in dem ersten Fall das flache Gefäß überläuft, wohingegen das hohe Gefäß nur ungenügend befüllt wird.

Ausgehend von diesem Stand der Technik liegt der vorliegenden Erfindung die Aufgabe zugrunde, ein System zur Verfügung zu stellen, dass bei beliebigen zu befüllenden Gefäßen eine Optimalbefüllung gewährleistet. Als Optimalbefüllung wird hierbei eine Befüllung betrachtet, bei der bei beliebiger Höhe der Gefäße stets ein definierter Abstand zwischen dem oberen Gefäßrand und der Flüssigkeitsoberfläche vorliegt. Als definierter Abstand wird hierbei ein Abstand mit einer maximalen Abweichung des Ist-Wertes von Soll-Wert von weniger als 10% angesehen.

Diese Aufgabe wird durch ein System zum Befüllen eines Trinkgefäßes mit den Merkmalen gemäß Patentanspruch 1 gelöst. Vorteilhafte Aus- und Weiterbildung der Erfindung, welche einzeln oder in Kombination mit einander eingesetzt werden können, sind Gegenstand der Unteransprüche.

Das erfindungsgemäße System zum Befüllen eines Trinkgefäßes mit einem Getränk zeichnet sich dadurch aus, dass bei diesem System eine erste Messeinrichtung die durch den oberen Rand des Trinkgefäßes definierte maximale Füllhöhe des zu befüllenden Trinkgefäßes ermittelt, die erste oder eine zweite Messeinrichtung zumindest zyklisch die aktuelle Ist-Füllhöhe ermittelt, und ein Steuermittel den Befüllvorgang automatisch abbricht, sobald die aktuelle Ist-Füllhöhe im Wesentlichen mit einer vorgegebenen Soll-Füllhöhe übereinstimmt, wobei die Soll-Füllhöhe sich aus einem vordefinierten oder individuell definierbaren Abstand zur maximalen Füllhöhe bestimmt. Dadurch wird gegenüber dem Stand der Technik ein eine erhebliche Verbesserung der automatischen Befüllung erreicht. Dadurch, dass die die durch den oberen Rand des Trinkgefäßes definierte maximale Füllhöhe sowie die Ist-Füllhöhe getrennt ermittelt werden, wird es ermöglicht, dass bei Gefäßen mit einer beliebigen Höhe stets ein definierter Abstand zwischen der Flüssigkeitsoberfläche und dem oberen Rand des Gefäßes gewährleistet ist.

Als vorteilhaft hat es sich dabei erwiesen, wenn das System ein Programm aufweist, mittels dessen der zu erreichende Abstand zwischen der Flüssigkeitsoberfläche und dem oberen Rand des Gefäßes programmierbar ist. Wird beispielsweise die Befüllung eines Gefäßes durchgeführt, welches nach der Befüllung in einen anderen Raum transportiert werden soll, so ist es günstiger, den Abstand zwischen dem oberen Gefäßrand und der Flüssigkeitsoberfläche zu vergrößern. Dadurch wird gewährleistet, dass bei diversen Transportschritten nicht der Inhalt des Gefäßes verschüttet wird. Wird im Gegensatz hierzu jedoch ein Gefäß befüllt, dass dann vor Ort, bzw. in unmittelbarer Nähe des Befüllortes entleert werden soll, so kann es günstiger sein, den Abstand zwischen dem oberen Rand des Gefäßes und Flüssigkeitsoberfläche zu verkleinern. Von Vorteil ist es dabei auch, wenn das System ein Programm aufweist, mittels dessen der Anwender den definierten Abstand zwischen der Flüssigkeitsoberfläche und dem oberen Rand bestimmen kann. So kann der aktuell einprogrammierte Abstand zwischen der Flüssigkeitsoberfläche und dem oberen Rand über ein Display angezeigt werden, und je nach Bedarf mittels Eingabe über ein Tastenfeld verändert werden.

Als vorteilhaft hat es sich dabei erwiesen, wenn die erste oder eine zweite Messeinrichtung kontinuierlich die aktuelle Ist-Füllhöhe ermittelt.

Von besonderem Vorteil ist es dabei, wenn die zweite Messeinrichtung ein Abstandssensor ist.

In einer bevorzugten Ausführungsform ist die erste und/oder zweite Messeinrichtung eine Kamera mit einer Bilderkennungselektronik.

Besonders vorteilhaft ist es dabei, wenn die zweite Messeinrichtung auf Infrarot- oder Ultraschallbasis arbeitet.

In einer besonders bevorzugten Ausführungsform ist die wenigstens eine Kamera eine 3D-Kamera. Dies hat den Vorteil, dass mittels einer räumlichen Darstellung Tiefeninformationen übertragen werden können.

In einer bevorzugten Ausführungsform bestimmt sich die Soll-Füllhöhe in Abhängigkeit von der Temperatur des zu befüllenden Getränks. Dies bedeutet für den Anwender einen erheblichen Vorteil bezüglich des Komforts und der Sicherheit der Befüllung. Wird zum Beispiel eine Flüssigkeit mit sehr hoher Temperatur in das Gefäß gefüllt, so kann es von Vorteil sein, wenn der Abstand zwischen oberem Gefäßrand und Flüssigkeitsoberfläche größer gewählt wird. Dies hat den Vorteil, dass eine Verbrennungsgefahr beim ersten Antrinken der Flüssigkeit reduziert ist. Wird eine Flüssigkeit kühlerer Temperatur in das Gefäß gefüllt, so kann hingegen der Abstand zwischen Flüssigkeitsoberfläche und dem oberen Rand des Gefäßes geringer gewählt werden, weil hier keine Verbrennungsgefahr besteht.

Von besonderem Vorteil ist es, wenn das über das System abgefüllte Getränk Wasser ist.

Von ganz besonderem Vorteil ist es hierbei, wenn das System in einer bevorzugten Ausführungsform Teil eines Wasserspenders ist. Wasserspender werden in einer großen Vielzahl in verschiedenen Bereichen wie Einkaufszentren, Arztpraxen oder Behörden angeboten. Aufgrund einer anzustrebenden Vermeidung von zusätzlichem Müll durch Einwegbecher sowie aufgrund einer damit zu erzielenden Kosteneinsprung besteht ein erhöhter Bedarf an Wasserspendern oder ähnlichen Geräten, die unabhängig von dem eingebrachten zu befüllenden Gefäß in zuverlässiger Weise eine gleichförmige Befüllung vornehmen.

Das erfindungsgemäße System gewährleistet auf kostengünstige und zuverlässige Weise eine optimale Befüllung von Gefäßen beliebiger Höhe.

Weitere Vorteile und Ausgestaltungen der Erfindung werden im Folgenden anhand verschiedener Ausführungsbeispiele, auf welche die vorliegende Erfindung jedoch nicht beschränkt ist, sowie unter Bezugnahme auf die beiliegenden Zeichnungen erläutert.

Darin zeigen schematisch:
Fig. 1 eine schematische Darstellung einer ersten Ausführungsform eines Systems; und
Fig. 2 eine schematische Ansicht eines weiteren Ausführungsbeispiels des Systems.

Bei der nachfolgenden Beschreibung der bevorzugten Ausführungsformen der vorliegenden Erfindung bezeichnen gleiche Bezugszeichen gleiche oder vergleichbare Komponenten.

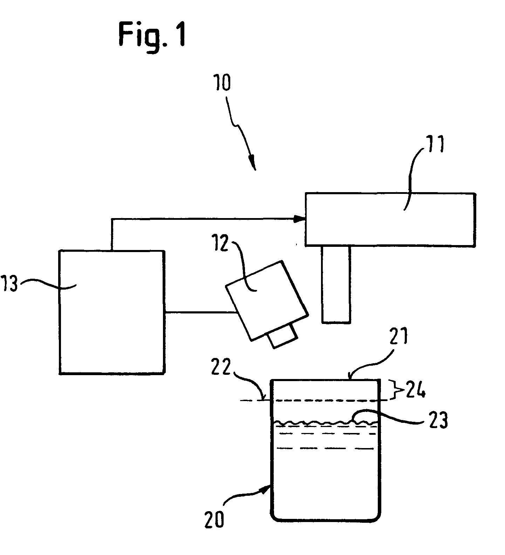

Fig. 1 zeigt in einer schematischen Darstellung eine Ausführungsform des Systems 10 zum Befüllen eines Trinkgefäßes 20. Dieses System 10 weist eine Messeinrichtung 12 auf die die durch den oberen Rand 21 des Trinkgefäßes 20 definierte maximale Füllhöhe 21 des zu befüllenden Trinkgefäßes 20 sowie die aktuelle Ist-Füllhöhe 23 ermittelt. Diese Messeinrichtung 12 ist eine Kamera mit Bilderkennungselektronik, welche schräg über dem Trinkgefäß 20 steht. Ein Einfüllmodul 11 steht senkrecht über dem zu befüllenden Trinkgefäß 20, wohingegen die Messeinrichtung 12 schräg über dem Trinkgefäß 20 steht. Darüber hinaus weist das System 10 ein Steuermittel 13 auf. Dieses Steuermittel 13 bricht den Befüllvorgang automatisch ab, sobald die aktuelle Ist-Füllhöhe 23 im Wesentlichen mit einer vorgegebenen Soll-Füllhöhe 22 übereinstimmt, wobei die Soll-Füllhöhe 22 sich aus einem vordefinierten oder individuell definierbaren Abstand 24 zur maximalen Füllhöhe 21 bestimmt. Auf Fig. 1 ist ein Abstand 24 der Soll-Füllhöhe 22 zur maximalen Füllhöhe 21 abgebildet, der sich für Kaltgetränke eignet. Der vordefinierte oder individuell definierbare Abstand 24 ist bei einem Kaltgetränk verhältnismäßig schmal und beträgt 2 bis 5 cm.

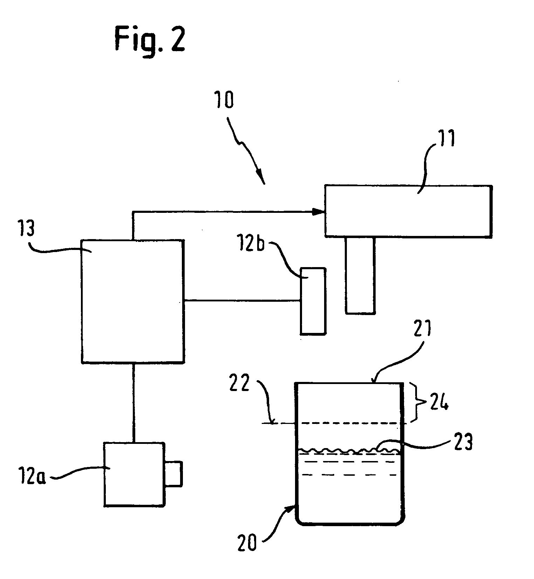

Fig. 2 zeigt in einer schematischen Darstellung eine weitere Ausführungsform des Systems 10 zum Befüllen eines Trinkgefäßes 20. Das System 10 zum Befüllen eines Trinkgefäßes 20 weist eine erste Messeinrichtung 12a auf, die die durch den oberen Rand 21 des Trinkgefäßes 20 definierte maximale Füllhöhe 21 des zu befüllenden Trinkgefäßes 20 ermittelt. Darüber hinaus weist das System 10 eine zweite Messeinrichtung 12b auf, die zumindest zyklisch die aktuelle Ist-Füllhöhe 23 ermittelt. Darüber hinaus weist das System ein Steuermittel 13 auf, welches den über ein Einfüllmodul 11 ablaufenden Befüllvorgang automatisch abbricht, sobald die aktuelle Ist-Füllhöhe 23 im Wesentlichen mit einer vorgegebenen Soll-Füllhöhe 22 übereinstimmt. Auf Fig. 2 ist ein Abstand 24 der Soll-Füllhöhe 22 zur maximalen Füllhöhe 21 abgebildet, der sich für Heißgetränke eignet. Dieser Abstand 24 ist bei Heißgetränken größer als bei Kaltgetränken, um eine Verbrühungsgefahr beim Trinken der ersten Flüssigkeitsanteile zu vermeiden. Der vordefinierte oder individuell definierbare Abstand 24 beträgt bei einem Heißgetränk 5 bis 8 cm.

Das erfindungsgemäße System 10 gewährleistet auf kostengünstige und zuverlässige Weise eine optimale Befüllung von Gefäßen beliebiger Höhe.

### BEZUGSZEICHENLISTE

- 10: System, Befüllsystem
- 11: Einfüllmodul
- 12, 12a: Erste Messeinrichtung zur Ermittlung einer durch den oberen Rand 3 des Trinkgefäßes 2 definierten maximale Füllhöhe
- 12b: Zweite Messeinrichtung zur Ermittlung der aktuellen Ist-Füllhöhe des Trinkgefäßes 2
- 13: Steuerung

- 20: Trinkgefäß
- 21: Rand des Trinkgefäßes 20, maximale Füllhöhe
- 22: Soll-Füllhöhe
- 23: Ist-Füllhöhe, Flüssigkeitsoberfläche
- 24: Abstand

## Patentansprüche

1. System (10) zum Befüllen eines Trinkgefäßes (20) mit einem Getränk, bei dem eine erste Messeinrichtung (12a; 12) die die durch den oberen Rand (21) des Trinkgefäßes (20) definierte maximale Füllhöhe (21) des zu befüllenden Trinkgefäßes (20) ermittelt; die erste (12a; 12) oder eine zweite Messeinrichtung (12b) zumindest zyklisch die aktuelle Ist-Füllhöhe (23) ermittelt, und bei dem ein Steuermittel (13) den Befüllvorgang automatisch abbricht, sobald die aktuelle Ist-Füllhöhe (23) im Wesentlichen mit einer vorgegebenen Soll-Füllhöhe (22) übereinstimmt, wobei die Soll-Füllhöhe (22) sich aus einem vordefinierten oder individuell definierbaren Abstand (24) zur maximalen Füllhöhe (21) bestimmt, bei dem die erste (12a; 12) oder die zweite Messeinrichtung (12b) kontinuierlich die aktuelle Ist-Füllhöhe (23) ermittelt, **dadurch gekennzeichnet, dass** als erste (12; 12a) und/oder zweite Messeinrichtung (12b) eine Kamera mit einer Bilderkennungselektronik vorgesehen ist.

2. System (10) nach Anspruch 1 oder 2, bei dem die zweite Messeinrichtung (12b) ein Abstandssensor umfasst.

3. System (10) nach Anspruch 1, bei dem die zweite Messeinrichtung (12b) auf Infrarotbasis arbeitet.

4. System (10) nach Anspruch 1, bei dem wenigstens eine Kamera eine 3D-Kamera ist.

5. System (10) nach einem der vorhergehenden Ansprüche, bei dem die Soll-Füllhöhe (22) sich in Abhängigkeit von der Temperatur des zu befüllenden Getränks bestimmt.

6. System (10) nach einem der vorhergehenden Ansprüche, bei dem das Getränk Wasser ist.

7. System (10) nach einem der vorhergehenden Ansprüche, bei dem das System (10) Teil eines Wasserspenders ist.

## Claims

1. System (10) for filling a beverage vessel (20) with a beverage, in which a first measuring device (12a; 12) determines the maximum filling height (21), which is defined by the upper edge (21) of the beverage vessel (20), of the beverage vessel (20) to be filled; the first measuring device (12a; 12) or a second measuring device (12b) determines the instantaneous actual filling height (23) at least cyclically, and in which a control means (13) automatically interrupts the filling process as soon as the instantaneous actual filling height (23) substantially corresponds with a predetermined target filling height (22), wherein the target filling height (22) is determined from a predefined or individually definable spacing (24) from the maximum filling height (21), and in which the first measuring device (12a; 12) or the second measuring device (12b) continuously determines the instantaneous actual filling height (23), **characterised in that** a camera with an electronic image recognition system is provided as first measuring device (12; 12a) and/or second measuring device (12b).

2. System (10) according to claim 1, in which the second measuring device (12b) comprises a distance sensor.

3. System (10) according to claim 1, in which the second measuring device (12b) operates on an infrared basis.

4. System (10) according to claim 1, in which at least one camera is a three-dimensional camera.

5. System (10) according to any one of the preceding claims, in which the target filling height (22) is determined in dependence on the temperature of the beverage to be filled.

6. System (10) according to any one of the preceding claims, in which the beverage is water.

7. System (10) according to any one of the preceding claims, in which the system (10) is part of a water dispenser.

## Revendications

1. Système (10) pour remplir un gobelet (20) d'une boisson, dans lequel un premier dispositif de mesure (12a ; 12) détecte la hauteur de remplissage maximale (21), définie par le bord supérieur (21) du gobelet (20), du gobelet (20) à remplir ; dans lequel le premier (12a ; 12) ou un second dispositif de mesure (12b) détecte au moins cycliquement la hauteur de remplissage réelle actuelle (23), et dans lequel un moyen de commande (13) interrompt automatiquement l'opération de remplissage dès que la hauteur de remplissage réelle actuelle (23) correspond essentiellement à une hauteur de remplissage théorique prédéfinie (22), la hauteur de remplissage théorique (22) se déterminant à partir d'un écart (24) prédéfini ou individuellement définissable par rapport à la hauteur de remplissage maximale (21), dans lequel le premier (12a ; 12) ou le second dispositif de mesure (12b) détecte continuellement la hauteur de remplissage réelle actuelle (23), **caractérisé en ce qu'**une caméra munie d'une électronique de reconnaissance d'images est ménagée en tant que premier (12 ; 12a) et/ou second dispositif de mesure (12b).

2. Système (10) selon la revendication 1, dans lequel le second dispositif de mesure (12b) comprend un capteur de distance.

3. Système (10) selon la revendication 1, dans lequel le second dispositif de mesure (12b) travaille sur la base des infrarouges.

4. Système (10) selon la revendication 1, dans lequel au moins une caméra est une caméra 3D.

5. Système (10) selon l'une quelconque des revendications précédentes, dans lequel la hauteur de remplissage théorique (22) se détermine en fonction de la température de la boisson à remplir.

6. Système (10) selon l'une quelconque des revendications précédentes, dans lequel la boisson est de l'eau.

7. Système (10) selon l'une quelconque des revendications précédentes, dans lequel le système (10) fait partie d'un distributeur d'eau.
